# EUROPÄISCHE PATENTSCHRIFT

(11) **EP 2 906 817 B1**
(45) Veröffentlichungstag und Bekanntmachung des Hinweises auf die Patenterteilung: **27.02.2019**
(21) Anmeldenummer: 13714608.0
(22) Anmeldetag: 28.03.2013
(51) Int. Cl.: F03D 1/00, F03D 1/06, F03D 80/50

(54) **SICHERUNG EINES BEDIENERS WÄHREND WARTUNG EINER NABE EINER WINDKRAFTANLAGE**
PROTECTION OF A PERSONNEL DURING MAINTENANCE OF A WIND TURBINE HUB
PROTECTION DU TECHNICIEN PENDANT TRAVAUX AU MOYEU D'UNE EOLIENNE

(30) Priorität: 10.01.2013 EP 13150842
(43) Veröffentlichungstag der Anmeldung: 19.08.2015
(73) Patentinhaber: Siemens Aktiengesellschaft, 80333 München (DE)
(72) Erfinder: EBBESEN, Henning, DK-6900 Skjern (DK); STEEN, Stephan Breum, DK-7100 Vejle (DK)
(86) Internationale Anmeldenummer: PCT/EP2013/056683
(87) Internationale Veröffentlichungsnummer: WO 2014/108216

(56) Entgegenhaltungen:
- EP-A1- 2 662 559
- EP-A2- 2 192 297
- EP-A2- 2 484 893
- DE-A1-102009 035 248
- DE-U1- 29 817 382
- DE-U1-202012 006 595

## Beschreibung

Die vorliegende Erfindung betrifft eine Sicherungsvorrichtung zur Sicherung eines Bedieners für eine Anordnung in einem Rotor, insbesondere einer Windturbine. Sie betrifft außerdem ein Verfahren zur Sicherung eines Bedieners für eine Anordnung in einem Rotor, insbesondere einer Windturbine.

Unter "Rotoren" werden z. B. die Antriebspropeller von Flugzeugen, Hubschraubern und Schiffen verstanden wie auch die zur Energiegewinnung dienenden Wind- und Wasserräder. Windturbinen, insbesondere großtechnische Windturbinen, weisen eine Gondel auf, die auf einem Turm angeordnet ist, sowie einen Rotor, der an der Gondel gelagert ist. Der Rotor stellt einen beweglichen Teil der Windturbine dar. Er ist mittels eines Schaftes am Antriebsstrang mit dem Inneren der Gondel verbunden, in dem sich typischerweise der Generator sowie weitere elektrische und elektronische Elemente befinden. Im Rahmen der Erfindung wird als "Rotor" die Gesamtheit aus einer Nabe, an der Nabe befestigten Rotorblättern und einer drehbaren, weitgehend horizontal liegenden, Rotorachse verstanden. Bei bestimmungsgemäßer Verwendung des Rotors treiben die Rotorblätter die Nabe bzw. die Rotorachse und damit den Generator an.

Der Rotor der Windturbine ist üblicherweise bestückt mit einer Anzahl an Rotorblättern, beispielsweise zwei, drei oder mehr Rotorblättern, die radial von der weitgehend horizontalen Mittelachse des Rotors abstehend montiert sind. Die Rotorblätter werden im Betrieb oftmals mithilfe eines Einstellungsmechanismus so fortlaufend in den Wind gedreht, dass eine optimale Energieausbeute aus dem vorhandenen Wind erzielt werden kann. Dies kann z. B. mittels einer Verdrehung der Gondel (yaw drive) und/oder mittels einer Blattwinkelverstellung (pitch drive) der Rotorblätter erzielt werden.

Der Rotor stellt ein hoch komplexes System dar, in dem insbesondere viele bewegliche Elemente wie die Rotorblätter und die entsprechende Einstellungsmechanik angeordnet sind. Daher ist es notwendig, von zeit zu Zeit Wartungsarbeiten und bei Bedarf auch Reparaturen am Rotor vorzunehmen. Insbesondere die Nabe des Rotors, das heißt ein drehbares Mittelstück, an dem die Rotorblätter befestigt sind (eine Nabe mit einer Blattwinkelverstellung wird im Übrigen auch als "Rotorkopf" bezeichnet, im Folgenden wird aber einheitlich der Begriff "Nabe" genutzt), stellt einen Bereich dar, in dem es für Servicepersonal besonders schwierig und riskant ist zu arbeiten. Hier müssen beispielsweise regelmäßig Bolzen kontrolliert bzw. nachgezogen werden, mit denen die Rotorblätter an der Nabe befestigt sind.

Die genannten Servicearbeiten werden heutzutage üblicherweise von Personal durchgeführt, das durch mobile Gerüste und/oder Sicherheitsgurte gesichert wird. Dabei müssen die Servicemitarbeiter in einer zumeist großen Fallhöhe im Bereich der offenen (d. h. mit einem Durchgang zur Gondel versehenen) Nabe im Endbereich des Rotors umher klettern. Derartige Vorgehensweisen sind sehr riskant und außerdem aufwändig, da die Servicemitarbeiter zu jedem Zeitpunkt möglichst optimal gesichert sein müssen. Die Bolzen eines Rotorblatts einer relativ kleinen Windturbine können von einem Sicherheitskorb aus erreicht werden, wie in DE 298 17 382 U1 beschrieben. Die Wartung der Rotorblattanschlussflansche einer großen Windkraftanlage ist erheblich aufwändiger und gefährlicher. In einem aus der EP 2 484 893 A2 bekannten Verfahren wird eine ringförmige offene Plattform um jedes Rotorblatt angebracht. Zugang zur Plattform gelingt vom Gondeldach bzw. durch eine Öffnung im Rotorgehäuse. Von einer Plattform aus kann ein Wartungstechniker die Bolzen des Rotorblatts prüfen.

Zunehmend werden größere Windkraftanlagen so gebaut, dass ein Rotorgehäuse sowohl die Nabe als auch die Anschlussflanschen der Rotorblätter umschließt. Wartungsarbeiten werden innerhalb eines schalenförmigen Wartungsraums zwischen der Nabe und dem Rotorgehäuse durchgeführt. Die Sicherheit eines Wartungstechnikers wird durch die gekrümmte Oberfläche der Nabe und die Enge des Wartungsraums beeinträchtigt, zudem kann bei einer solchen Windkraftanlage die Fallwege hoch sein, so dass Sicherungsgeschirr oder Sicherungsleinen erforderlich sind um die Sicherheit der Wartungstechniker zu gewährleisten.

Ausgehend von der hier dargestellten Problematik liegt der Erfindung die Aufgabe zugrunde, die Möglichkeit einer verbesserten Sicherung eines Bedieners für die Arbeit im Nabenbereich eines Rotors bereitzustellen. Insbesondere wird bevorzugt Wert gelegt auf eine einfachere Möglichkeit der Sicherung, und/oder eine solche Sicherung, die mit einem höheren Sicherheitsstandard ausgestattet ist.

Diese Aufgabe wird durch eine Sicherungsvorrichtung gemäß Anspruch 1 und durch ein Verfahren gemäß Anspruch 15 gelöst.

Demgemäß umfasst eine Sicherungsvorrichtung zur Sicherung eines Bedieners in einem Hohlraum zwischen Nabe und Rotorgehäuse mindestens folgende Elemente:
- eine Plattform mit einer Anzahl von Aufstandsflächen, von welchen im bestimmungsgemäßen Einsatz der Sicherungsvorrichtung zumindest eine Aufstandsfläche im Wesentlichen horizontal liegt,
- Fixiereinrichtung zum Fixieren der Plattform an einer Nabe des Rotors und/oder an einer Innenseite eines Rotorgehäuses des Rotors.

Die Erfindung bietet dem Bediener eine mindestens temporär fest installierte Plattform mit mehreren Flächen an, die derart gestaltet und bemessen sind, dass er sicher auf zwei Beinen auf ihnen stehen kann. Diese Flächen werden im Rahmen der Erfindung als "Aufstandsflächen" bezeichnet. Erfindungsgemäß liegt in mindestens einer Position des Rotors eine Aufstandsfläche der Plattform im Wesentlichen horizontal. Diese Position des Rotors wird als bestimmungsgemäß für den Einsatz der Sicherungsvorrichtung charakterisiert. Eine horizontale Fläche bietet den Vorteil, dass sie die Gefahr eines Abrutschens des Bedieners minimiert.

Im Rahmen der Erfindung wird als "Rotorgehäuse" die Gesamtheit aller Gehäusesegmente des Rotors bezeichnet, die die Nabe und Anschlussflansche von Rotorblättern auf der Nabe umgeben. Das Rotorgehäuse umfasst insbesondere auch eine Nase oder Kappe, d. h. eine haubenartige Abdeckung der Nabe gegen die Windrichtung.

Um die Plattform so auszugestalten, dass ein Bediener sicher auf ihr arbeiten kann, ist sie mittels der Fixiereinrichtung an der Nabe und/oder an der Innenseite des Rotorgehäuses des Rotors fixiert. Die Plattform ist also im eingebauten Zustand im Rotor ein Teil des äußersten Endes des Rotors.

Eine derartige Plattform kann mithilfe der Fixiereinrichtung fest oder lösbar im Bereich der Nabe des Rotors angebracht sein. Bei einer festen Fixierung ist die Plattform im Endeffekt fester Bestandteil des Rotors bzw. der Nabe. Bei einer lösbaren Fixierung kann die Plattform bzw. die Sicherungsvorrichtung auch als Nachrüstlösung oder als montierbare und wieder demontierbare Vorrichtung ausgebildet sein. Die Fixiereinrichtung kann beispielsweise eine Schraub-, Niet-, Bolzen- oder Klebeverbindung umfassen.

Mit Hilfe der durch die Fixiereinrichtung im Bereich der Nabe des Rotors fixierten Plattform wird zusätzlich zu einer üblicherweise gekrümmten Oberfläche der Nabe eine Anzahl von Aufstandsflächen bereitgestellt, die für den Bediener während der bestimmungsgemäßen Ausrichtung jederzeit definierte Wege und Handlungsbereiche bereitstellt. Das Wartungspersonal wird außerdem deutlich besser vor einem Fall aus großer Höhe gesichert und kann freier auf der Plattform operieren, insbesondere unbehindert von Sicherungsgeschirr bzw. entsprechenden Sicherungsleinen. Fallwege werden verkürzt, da die Plattform zugleich auch als eine Art Raumteiler des Innenraums zwischen der Nabe und dem Rotorgehäuse fungiert. Insgesamt erleichtern sich dadurch Wartungs- und Reparaturarbeiten im Bereich der Nabe des Rotors, beispielsweise zur Erneuerung einer Versiegelung oder zur Inspektion und zum Nachziehen von Bolzen, welche die Rotorblätter an der Nabe befestigen.

Die Erfindung umfasst außerdem einen Rotor, insbesondere einen Rotor einer Windturbine mit einer erfindungsgemäßen Sicherungsvorrichtung sowie eine Windturbine mit einer erfindungsgemäßen Sicherungsvorrichtung.

Außerdem umfasst die Erfindung ein Verfahren zur Sicherung eines Bedieners mit einer Sicherungsvorrichtung in einem Hohlraum zwischen Nabe und Rotorgehäuse (eines Rotors, wobei zumindest eine Aufstandsfläche einer Plattform der Sicherungsvorrichtung im bestimmungsgemäßen Einsatz der Sicherungsvorrichtung im Wesentlichen horizontal positioniert wird, wobei die Plattform an einer Nabe des Rotors und/oder an einer Innenseite eines Rotorgehäuses des Rotors fixiert ist.

Mit Hilfe der erfindungsgemäßen Sicherungsvorrichtung kann das erfindungsgemäße Verfahren realisiert werden.

Weitere, besonders vorteilhafte Ausgestaltungen und Weiterbildungen der Erfindung ergeben sich aus den abhängigen Ansprüchen sowie aus der nachfolgenden Beschreibung, wobei die unabhängigen Ansprüche einer Anspruchskategorie auch analog zu den abhängigen Ansprüchen einer anderen Anspruchskategorie weitergebildet sein können.

Grundsätzlich kann die Plattform derart schwimmend an der Nabe bzw. am Rotorgehäuse aufgehängt oder gelagert sein, dass sie jederzeit in der bestimmungsgemäßen Position für den Einsatz ausgerichtet ist. In diesem Falle steht also mindestens eine Aufstandsfläche der Plattform stets in der Horizontalen. Die Plattform kann beispielsweise ein Gewicht aufweisen, dass sie stets in die horizontale Position zieht und eine zusätzliche Arretiereinrichtung, damit sie bei einem Wartungseinsatz zuverlässig in dieser Position verbleibt. Gemäß einer bevorzugten Ausgestaltungsform ist die Sicherungsvorrichtung fest an der Nabe des Rotors und/oder an der Innenseite des Rotorgehäuses montiert. Die Plattform dreht also bei einer Rotationsbewegung des Rotors bzw. der Nabe und des Rotorgehäuses automatisch, d. h. richtungs- und winkelgleich mit. Vorteilhafterweise sind Aufstandsflächen der Plattform in unterschiedlichen Winkeln zueinander angeordnet, sodass die Sicherungsvorrichtung nicht nur bei einer einzigen Position des Rotors eine horizontale Aufstandsfläche bereitstellt.

Nach einer bevorzugten Ausführungsform der Erfindung ist die Plattform derart relativ zu jeweils zwei Anschlussflanschen von Rotorblättern an der Nabe angeordnet, dass eine Aufstandsfläche an einer zum Rotorgehäuse weisenden Seite der Plattform im Wesentlichen parallel zu einer Scheitelfläche der Nabe liegt. Als "Scheitelfläche" wird ein Bereich der gekrümmten Oberfläche der Nabe verstanden, der zwischen zwei benachbarten Anschlussflanschen der Nabe liegt. Bei einer Rotation der Nabe um die Rotorachse sind die radial um die Rotorachse angeordneten Scheitelflächen daher abwechselnd an einer Oberseite bzw. einer Unterseite der Nabe im Wesentlichen horizontal ausgerichtet. "Im Wesentlichen horizontal" bedeutet hierbei, dass die gekrümmte Scheitelfläche symmetrisch relativ zu einer weitgehend ebenen Aufstandsfläche steht. Ein dreiflügeliger Rotor weist beispielsweise drei Scheitelflächen auf.

An den Scheitelflächen der Nabe hält sich z. B. das Wartungspersonal regelmäßig besonders lange auf, da sie bei einer im Wesentlichen horizontalen Ausrichtung einen sicheren, weil vergleichsweise wenig abschüssigen, Aufenthaltsort darstellen und einen bequemen Zugang zu den benachbarten Anschlussflanschen der Rotorblätter bieten. Eine im Wesentlichen parallele Lage der Aufstandsflächen an den Außenseiten der Plattform zu den jeweils korrespondierenden Scheitelflächen der Nabe erweist sich als besonders günstig, da ein Aufstieg des Bedieners von einer Aufstandsfläche zur nächstliegenden Scheitelfläche deutlich vereinfacht wird. Dies spielt insbesondere dann eine Rolle, wenn der Bediener z. B. eine mobile Leiter auf die Aufstandsfläche aufstellt und ggf. gegen eine Stirnfläche der Nabe lehnt und dann die Leiter in Richtung der Scheitelfläche hinauf klettert.

Vorzugsweise ist die Plattform der Sicherungsvorrichtung derart relativ zu Haupterstreckungsrichtungen der Rotorblätter einer Windturbine angeordnet, dass immer dann, wenn ein Rotorblatt entlang einem Turm der Windturbine abwärts zu einer Bodenfläche weist, eine Aufstandsfläche an einer Außenseite der Plattform weitgehend horizontal liegt. Dies eröffnet die Möglichkeit, dass eine Rotorblatt-Befahranlage entlang dem Rotorblatt zwischen der Nabe und einer Rotorblattspitze bewegt werden kann (z. B. für Inspektions- und Wartungsarbeiten) und gleichzeitig ein Bediener innerhalb des Wartungsraumes zwischen der Nabe und dem Rotorgehäuse Inspektions- und/oder Wartungsarbeiten verrichten kann.

Vorzugsweise ist die Sicherungsvorrichtung derart ausgestaltet, dass die Plattform einen Hohlraum zwischen der Nabe und der Innenseite des Rotorgehäuses in im Wesentlichen mindestens zwei voneinander separierte Hohlraumbereiche teilt. Das Rotorgehäuse kann in einem Abstand zur Nabe stehen, der so bemessen ist, dass ein Bediener sich zumindest kriechend, knieend oder halb aufrecht darin bewegen kann. Der Hohlraum kann schalenförmig ausgebildet sein und wird mindestens durch die an der Nabe angesetzten Rotorblätter durchdrungen. Die Plattform kann sich zwischen einer Oberfläche an der Außenseite der Nabe und einer Oberfläche an der Innenseite des Rotorgehäuses erstrecken. Eine Aufteilung des Hohlraums erweist sich als vorteilhaft, da sich der Fallweg eines Bedieners bei einem Herunterfallen bzw. Abgleiten in dem Hohlraum bzw. entlang der Oberfläche der Nabe deutlich reduziert. Besonders bevorzugt ist die Plattform daher derart ausgebildet, dass sie den Hohlraum in eine Mehrzahl separierter Hohlraumbereiche teilt.

Grundsätzlich kann die Plattform der Sicherungsvorrichtung eine beliebige, z. B. eine polygonale oder kreisrunde, Gestalt besitzen. Nach einer bevorzugten Ausführungsform umfasst die Plattform drei Plattformelemente mit jeweils zumindest einer Aufstandsfläche, die ein Dreieck bilden. Die Plattformelemente können rundlich oder eckig, z. B. rechteckig oder quadratisch, ausgebildet sein. Sie können die Form eines Rahmens, Gitters, oder Gerüsts besitzen, eine gleiche oder unterschiedliche Größe aufweisen. Die Plattformelemente können ein Dreieck ausbilden, indem sie an Enden bzw. weitgehend parallel zur Rotorachse verlaufenden Kanten miteinander verbunden sind. Ein Raum, der durch zur Rotorachse gerichtete Innenseiten der Plattformelemente umschlossen bzw. begrenzt wird, ist also ebenfalls dreiecksförmig. Er wird im Rahmen der Erfindung "Zentralraum" genannt. Vorzugsweise sind die Plattformelemente des Dreiecks hinreichend groß dimensioniert, dass der dreiecksförmige Zentralraum einen Bediener, z. B. einen Wartungstechniker, beherbergen kann.

Eine Dreiecksform der Plattform bietet den Vorteil, dass eine Ausrichtung der Aufstandsflächen mit einer Stellung der Rotorblätter insbesondere dann einfach koordiniert werden kann, wenn der Rotor der Windturbinen drei Rotorblätter aufweist.

Falls die Plattform als gleichseitiges Dreieck ausgebildet ist, kann sie so relativ zur Nabe positioniert werden, dass bei einer Rotordrehung um 120° stets ein Wechsel von einer ersten Aufstandsfläche in einer horizontalen Lage zu einer zweiten Aufstandsfläche in einer horizontalen Lage erfolgt. Die erfindungsgemäße Plattform reduziert also eine Abhängigkeit der horizontalen Lage einer Aufstandsfläche von einer Stellung der Rotorblätter.

Vorzugsweise umfasst mindestens eines der Plattformelemente zumindest eine Öffnung als Zugang für einen Bediener. Besonders bevorzugt umfassen alle Plattformelemente eine Öffnung. Die Öffnung(en) kann/können in vorteilhafter Weise eine Abmessung bzw. im Falle einer kreisrunden Öffnung einen Durchmesser aufweisen, die/der groß genug ist, damit ein Bediener von einem beliebigen Hohlraumbereich durch die Öffnung in einen anderen Hohlraumbereich gelangen kann. Der Bediener kann aus einem Raum im Inneren der Nabe in den Hohlraum zwischen der Nabe und dem Rotorgehäuse gelangen. Er kann anschließend aus dem Raum zunächst in einen Bereich innerhalb der dreiecksförmigen Plattform, den "Zentralraum", treten. Von dort aus erlaubt die erfindungsgemäße Öffnung in einem oder in jedem Plattformelement einen Zugang zu einem oder jedem beliebigen weiteren Hohlraumbereich, wobei der Zugang jeweils über einen Hohlraumbereich im Inneren der Plattform respektive den "Zentralraum" führt.

Prinzipiell kann eine Öffnung im Plattformelement im Betrieb der Sicherungsvorrichtung permanent geöffnet sein. Vorzugsweise umfasst die Sicherungsvorrichtung ein Schließelement zum Verschließen der Öffnung. Das Schließelement kann eine Klappe, eine Schiebetür, oder ein Rollo sein, das/die einen geöffneten und einen geschlossenen Zustand der Öffnung erlaubt. Es kann auch als entfernbarer Deckel ausgebildet sein. Mittels des Schließelements kann ein Bediener nach dem Passieren die Öffnung abdecken. Vorzugsweise ist das Schließelement derart ausgebildet, dass es mit einem Gewicht des Bedieners belastet werden kann, ohne sich selbständig zu öffnen.

Die erfindungsgemäße Weiterbildung trägt damit zur Sicherheit des Bedieners bei. Sie reduziert ein Verletzungsrisiko bei einem Abgleiten bzw. Hinunterfallen des Bedieners, z. B. ausgehend von der Scheitelfläche.

Gemäß einer bevorzugten Ausgestaltungsform der Sicherungsvorrichtung umfasst die Plattform Brückenelemente, die Berührungsstellen der Plattformelemente an jeweils zu einer Rotorachse weisenden Innenseiten der Plattformelemente überspannen. Unter einer "Berührungsstelle" wird ein Ort bzw. räumlicher Bereich verstanden, an dem Enden zweier Plattformelemente winkelig aufeinander treffen und z. B. miteinander verschweißt sind. Als "Innenseiten" der Plattformelemente werden jene Seiten verstanden, die bei einer räumlichen Ausprägung der Plattform zueinander und zugleich zur Rotorachse weisen. Die Brückenelemente können an beliebigen Punkten der Innenseiten ansetzen. Sie können die Gestalt eines Rahmens, Gitters oder Gerüsts besitzen, eine gleiche oder unterschiedliche Größe aufweisen. Sie können mittels Schraubverbindungen, Klebeverbindungen, Bolzen oder Nieten an den Plattformelementen befestigt sein. Vorzugsweise umfassen die Brückenelemente jeweils mindestens eine Aufstandsfläche, auf der ein Bediener stehen kann. Bei einer Ausstattung einer z. B. dreiecksförmigen Plattform mit z. B. drei erfindungsgemäßen Brückenelementen kann durch die Brückenelemente mindestens eine Verdoppelung der Aufstandsflächen an einer Innenseite der Plattform auf sechs Aufstandsflächen erzielt werden. Bei einer Rotorumdrehung um 360° kann ein Bediener folglich in sechs unterschiedlichen Positionen des Rotors eine horizontale Aufstandsfläche in einem Inneren Hohlraumbereich der Plattform nutzen.

Grundsätzlich können die Brückenelemente jeweils in einem beliebigen Winkel zu den Plattformelementen stehen. Vorzugsweise stehen die Plattformelemente an ihren zur Rotorachse weisenden Innenseiten in einem Winkel von 120° zu ebenfalls zur Rotorachse gerichteten Innenseiten jeweils benachbarter Brückenelemente. Bei einer Ausbildung der Plattform als gleichseitiges Dreieck resultiert daraus, dass jedes Brückenelement parallel zu einem jeweils gegenüberliegenden Plattformelement steht. Somit liegen bei einer Rotation eines Rotors um 120° in einem Ausgangs- und in einem Endzustand der Rotationsbewegung zwei parallele Stockwerke der Plattform, d. h. ein Plattform- und ein Brückenelement, in der Horizontalen. Damit wird beispielsweise ein Aufstellen einer Leiter auf einem Brückenelement deutlich erleichtert. Die Leiter kann dem Bediener helfen, um von einem Raum im Inneren der dreiecksförmigen Plattform zu einer darüber angeordneten Öffnung zu gelangen und durch sie auf eine darüber parallel liegende Aufstandsfläche eines Plattformelements. Folglich kann bei einer Rotation des Rotors um 60° ein Wechsel von einer Aufstandsfläche zu einer benachbarten Aufstandsfläche erfolgen, die dann jeweils in der Horizontalen liegen und eine sichere Aufstandsfläche für einen Bediener bieten. Die erfindungsgemäße Ausgestaltung kann eine Arbeit eines Wartungstechnikers im Hohlraum, z. B. an den Anschlussflanschen der Rotorblätter, deutlich vereinfachen.

Prinzipiell kann die Plattform ausschließlich an der Nabe des Rotors befestigt sein. Nach einer bevorzugten Ausgestaltungsform umfasst die Sicherungsvorrichtung Strebeelemente als Fixiereinrichtung, welche die Plattform an Berührungsstellen der Plattformelemente mit einer Innenseite des Rotorgehäuses verbinden. Die Strebeelemente können an beliebigen Punkten der Innenseite des Rotorgehäuses ansetzen. Sie können die Form eines Rahmens, Gitters, oder Gerüsts besitzen, eine gleiche oder unterschiedliche Größe aufweisen. Außerdem können sie mittels Schraubverbindungen, Klebeverbindungen, Bolzen oder Nieten an der Plattform bzw. an der Innenseite des Rotorgehäuses befestigt sein. Die Strebeelemente können darüber hinaus derart ausgebildet sein, dass sie den Hohlraum zwischen der Nabe des Rotors und einer Innenseite des Rotorgehäuses in separate Hohlraumbereiche aufteilen.

Grundsätzlich können die Strebeelemente an beliebigen Stellen des Rotorgehäuses, welches die Nabe und Anschlussflansche der Rotorblätter an der Nabe umschließt, verankert sein. Vorzugsweise sind sie im Bereich von Schnittstellen von Segmenten des Rotorgehäuses befestigt. Die an der Plattform montierten Strebeelemente verbinden damit die Segmente des Rotorgehäuses untereinander. Über die Strebeelemente kann die Plattform insofern als Versteifungselement des Rotorgehäuses dienen, als sie auf ein Gehäusesegment des Rotors wirkende Zugkräfte infolge ihrer Form viel wirksamer absorbiert als ein benachbartes Gehäusesegment. Eine Befestigung der Strebeelemente an Schnittstellen der Gehäusesegmente bietet darüber hinaus den Vorteil, dass an den Schnittstellen üblicherweise bereits Befestigungsmittel, z. B. flächige Winkelbleche, vorhanden sind, welche die Strebeelemente zum Andocken mitbenutzen können. Zudem kann dabei ein einziges Strebeelement an Enden zweier Gehäusesegmente des Rotors ansetzen und diese stabilisieren.

Vorzugsweise ist die Plattform zugleich auch an der Nabe montiert, sodass die Segmente des Rotorgehäuses nicht nur einander stützen, sondern letztlich an der Nabe des Rotors befestigt sind. Die Strebeelemente können dadurch etwaige andere Versteifungselemente, die die Nabe, ein Rotorgehäuse sowie eine Rotorhaube miteinander konstruktiv verbinden, ersetzen oder unterstützen. Die erfindungsgemäße Ausgestaltungsform dient somit als strukturelles Element eines Rotors und stabilisiert das Rotorgehäuse, was seine Widerstandsfähigkeit z. B. gegenüber Spitzenwindlasten erhöht. Damit bietet die Sicherungsvorrichtung einen wertvollen Synergieeffekt.

Die Strebeelemente können im Wesentlichen parallel zu einer Längsachse eines Blattes des Rotors zwischen Schnittstellen von Segmenten des Rotorgehäuses und der Plattform verlaufen. Die Sicherungsvorrichtung mit den Elementen der Plattformelemente, der Brückenelemente und der Strebeelemente kann symmetrisch aufgebaut sein, z. B. dreizählig radiärsymmetrisch. Eine derartige Ausbildung kann eine Arbeitssicherheit des Bedieners begünstigen, indem die Sicherungsvorrichtung in drei verschiedenen Positionen des Rotors jeweils eine gleiche Gestalt besitzt. Der Bediener ist also nicht gezwungen, sich an unterschiedliche Formen und Größen von Platten, Aufstandsflächen, Öffnungen zu gewöhnen bzw. anzupassen, was einen Teil seiner Aufmerksamkeit binden kann und unter Umständen zu Zeitverlust oder Unfällen führen kann. Vielmehr findet er eine einheitlich gestaltete Arbeitsumgebung vor.

Grundsätzlich können die Plattformelemente, Brückenelemente und Strebeelemente jeweils eine ganz unterschiedliche Gestalt aufweisen. Beispielsweise können die Plattformelemente flächig ausgebildet sein, die Strebeelemente dagegen als gitterförmige Strukturen. Vorzugsweise sind die Plattformelemente und/oder die Brückenelemente und/oder die Strebeelemente als flächige Platten ausgeprägt. Die flächigen Platten können beispielsweise Metallplatten, z. B. aus korrosionsbeständigem rostfreiem Stahl oder aus Aluminium sein. Alternativ können sie aus Kunststoff, z. B. aus Glasfaser verstärktem Kunststoff, aus Holz oder aus Carbonfaser bestehen.

Besonders bevorzugt sind die Plattformelemente, Brückenelemente und Strebeelemente ausschließlich als Platten ausgebildet. Sie stellen jeweils glatte Aufstandsflächen bereit, die eine besonders hohe Arbeitssicherheit gewährleisten, indem sie keine Angreifpunkte für ein Verhaken oder Einklemmen eines Bedieners bieten, das z. B. zu einem Stolpern und Fallen führen kann. Die erfindungsgemäßen Platten können dadurch den Plattformelementen, Brückenelementen und Strebeelementen zwei parallel zueinander liegende Aufstandsflächen auf einer Vorder- und einer Rückseite verleihen.

Vorzugsweise erstrecken sich die Platten durchgehend bzw. weitgehend lückenlos zwischen einer Außenseite der Nabe und einer Innenseite des Rotorgehäuses, sodass sie den gesamten Hohlraum durchschneiden. Die Platten stellen damit sicher, dass ein Bediener bei einem Herabfallen, z. B. von einer Scheitelfläche, nicht unwillentlich von einem Hohlraumbereich in einen anderen Hohlraumbereich gerät oder in einem Zwischenraum eingeklemmt wird. Der gleiche Vorteil ergibt sich für Werkzeuge oder Ersatzteile, die ein Bediener gegebenenfalls lose mit sich führen kann: Sie werden bei einem unerwünschten Verlieren bzw. Herabfallen an einem Hindurchrutschen in einen anderen Hohlraumbereich gehindert und können vom Bediener rasch wieder gefunden werden.

Darüber hinaus bieten die Platten den Vorteil, dass sie eine Rotorhaube an die Nabe anbinden können und damit eine Struktur des Rotorgehäuses zusätzlich verstärken. Vorzugsweise weisen die Platten daher Befestigungselemente zur Befestigung der Rotorhaube an der Plattform auf. Die Befestigungselemente können z. B. Winkelbleche umfassen, die mittels Niet- oder Schraubverbindungen an den Platten bzw. der Rotorhaube fixiert werden.

Gemäß einer bevorzugten Ausgestaltungsform der Sicherungsvorrichtung umfasst eine Erstreckung der Plattformelemente in einer Richtung weitgehend quer bzw. senkrecht zur Rotorachse mindestens 1m, vorzugsweise mindestens 1,3m und besonders bevorzugt mindestens 1,5m sowie höchstens 5m, vorzugsweise höchstens 4m und besonders bevorzugt höchstens 3m. Diese Erstreckung erlaubt eine optimale Anpassung der Sicherungsvorrichtung an Rotoren, insbesondere von Windturbinen, die eine unterschiedliche Größe und Leistungsfähigkeit aufweisen.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Es zeigen:
Figur 1 eine perspektivische Darstellung mit einem Teilschnitt eines Rotorgehäuses nach dem Stand der Technik,
Figur 2 einen perspektivischen Teilschnitt von rechts eines Rotorgehäuses mit einem Ausführungsbeispiel der erfindungsgemäßen Sicherungsvorrichtung,
Figur 3 eine Seitenansicht von rechts des Rotors einer Windturbine mit der Sicherungsvorrichtung,
Figur 4 eine Vorderansicht eines Rotorgehäuses mit der Sicherungsvorrichtung, und
Figur 5 eine schematische frontale Schnittansicht eines Rotorgehäuses mit der Sicherungsvorrichtung.

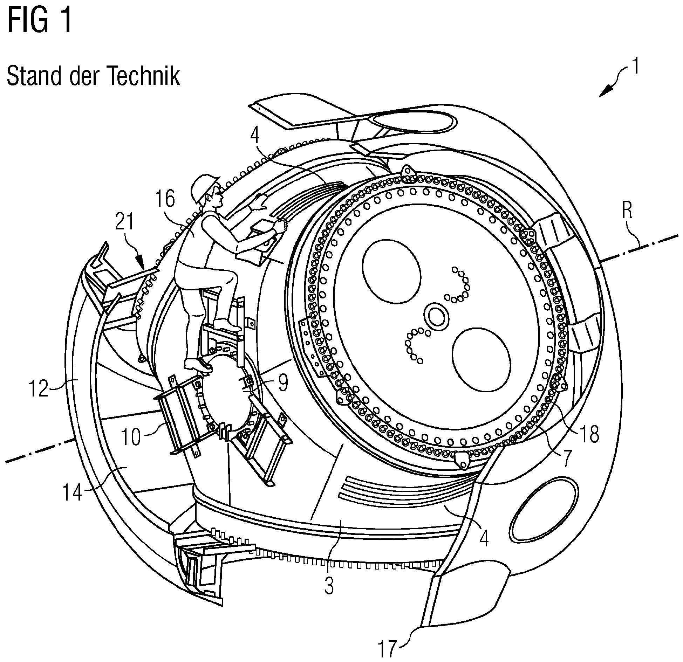

Figur 1 zeigt einen Ausschnitt eines Rotors 1 einer Windturbine mit einer Nabe 3, die von einem Rotorgehäuse 12 umschlossen ist. Der Rotor 1 ist dreiflügelig ausgebildet, d. h. er weist drei radial von der Nabe 3 abstehende Rotorblätter (in Figur 1 nicht dargestellt) auf. In einem Inneren der Nabe 3 befindet sich ein tunnelförmiger Hohlraum (nicht dargestellt), der als Zugang von einem Turm (nicht dargestellt) bzw. einer Gondel (nicht dargestellt) einer Windturbine zu Anschlussflanschen 7 der Rotorblätter 5 an der Nabe 3 dient. Den Tunnel verbindet ein Ausgang 9 mit einem schalenförmigen Wartungsraum 21 zwischen der Nabe 3 und dem Rotorgehäuse 12. Von einem Rand des Ausgangs 9 stehen radial drei jeweils zweisprossige Leiterabschnitte 10 ab. Ein Bediener 16, z. B. ein Wartungstechniker, klettert über einen oberen Leiterabschnitt 10 in Richtung einer Scheitelfläche 4 der Nabe 3. Die Scheitelfläche 4 bildet einen Bereich der gekrümmten Oberfläche der Nabe 3, der zwischen den zwei kreisrunden Anschlussflanschen 7 der Rotorblätter 5 des Rotors 1 liegt. Er bietet in der dargestellten Stellung der Nabe einen günstigen, weil weitgehend horizontal liegenden Aufenthaltsort für den Bediener 16, um z. B. Bolzen zu kontrollieren bzw. nachzuziehen, mit denen die Rotorblätter 5 an der Nabe 3 montiert sind. Nach dem Stand der Technik kann sich ein Bediener 16 mittels eines Sicherungsgeschirrs bzw. -gurtes an Sicherungspunkten anseilen, die an einer Innenseite 14 des Rotorgehäuses 12 und/oder auf einer äußeren Oberfläche der Nabe 3 liegen, und somit den Bediener 16 vor einem Abgleiten bzw. Herunterfallen schützen.

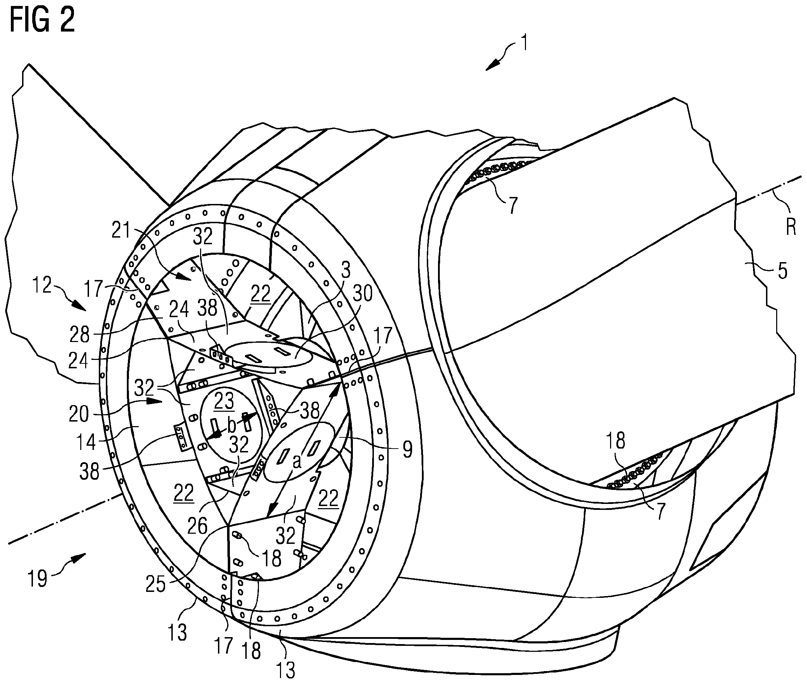

Die Figur 2 zeigt eine erfindungsgemäße Sicherungsvorrichtung 19 am Rotor 1. An der Nabe 3 des Rotors 1 ist frontal eine Plattform 20 montiert, die sich mit drei Füßen als Strebeelemente 28 bzw. Fixiereinrichtung an der Innenseite 14 des Rotorgehäuses 12 abstützt. Die Plattform 20 ist derart an der Nabe 3 fixiert, dass sie bei einer Rotationsbewegung des Rotors 1 automatisch mit dreht. Das Rotorgehäuse 12 besteht aus drei Gehäusesegmenten 13, welche die Nabe 3, Anschlussflansche 7 von Rotorblättern 5 und die Plattform 20 umschließen. Das Rotorgehäuse 12 weist eine frontale, kreisrunde Öffnung auf, die im Betrieb des Rotors 1 von einer Rotorhaube (nicht dargestellt) abgedeckt wird. Die Strebeelemente 28 der Plattform 20 docken an Schnittstellen 17 zwischen den Gehäusesegmenten 13 an. Die Plattform 20 und die Strebeelemente 28 sind weitgehend aus Metall gefertigt.

Die Plattform 20 weist drei längliche Plattformelemente 24 identischer Länge auf, die miteinander in Form eines gleichseitigen Dreiecks zusammengefügt sind. Die Plattformelemente 24 stehen in Innenwinkeln α von 60° zueinander. Jedes Plattformelement 24 weist in einer Richtung senkrecht zu einer Rotorachse R eine Erstreckung von 2m auf. An zur Rotorachse R gewandten Innenseiten 34 der Plattformelemente 24 überspannen Stege als Brückenelemente 26 die Spitzen des Dreiecks, d. h. die Nahtstellen zwischen zwei aneinander angrenzenden Plattformelementen 24. Die Spitzen bilden sich aus Berührungsstellen 25 der Plattformelemente 24. Jedes Brückenelement 26 steht dabei in einem Winkel von 120° zu einem benachbarten Plattformelement 24. Dadurch liegt jedes Brückenelement 26 auch parallel zu einem Plattformelement 24, die ihm jenseits eines Zentralraums 23 (als Hohlraumbereich) des Dreiecks gegenüber steht. Die Plattformelemente 24 weisen außerdem jeweils eine Öffnung 29 bzw. einen Durchbruch auf, die/der hier jeweils von einem entfernbaren, kreisrunden Deckel 30 als Schließelement abgedeckt ist. Die Deckel 30 besitzen einen Durchmesser b, der groß genug ist, dass ein Bediener durch die Öffnung 29 schlüpfen kann. Die Plattform 20 ist derart bemessen, dass der Zentralraum 23 groß genug ist, damit sich ein Bediener darin aufhalten und bewegen kann.

Während die Brückenelemente 26 einem Bediener jeweils eine Aufstandsfläche 32 zum Stehen bieten, weisen die Plattformelemente 24 jeweils zwei potentielle Aufstandsflächen 32 auf. Eine innere dieser Aufstandsflächen 32 weist dabei zur Rotorachse R, eine äußere Aufstandsfläche 32 zeigt zum Rotorgehäuse 12. Im Zentralraum 23 der Plattform 20 befinden sich daher sechs potentielle Aufstandsflächen 32. Wenn sich eine beliebige Aufstandsfläche 32 in einer horizontalen Lage befindet, bewirkt jede Drehung des Rotors 1 um 60° eine horizontale Position einer benachbarten Aufstandsfläche 32.

Die Strebeelemente 28 sitzen außen an Spitzen des Dreiecks der Plattform 20. Jedes Strebeelement 28 erstreckt sich im Wesentlichen parallel zu einer Längsachse L eines benachbarten Rotorblattes 5. Da die Strebeelemente 28 als flächige Platten ausgeformt sind, teilen sie zusammen mit den Plattformelementen 24 einen Wartungsraum 21 zwischen der Nabe 3 und dem Rotorgehäuse 12 (als Hohlraum) in drei Außenteilräume 22 (als Hohlraumbereiche) und einen Zentralraum 23 (als Hohlraumbereich), der innerhalb der Plattform 20 liegt.

An den Plattformelementen 24 sind mehrere Winkelbleche 38 montiert, welche die Plattform 20 einerseits an der Nabe 3 befestigen und andererseits an der Rotorhaube (nicht dargestellt) .

Die erfindungsgemäße Plattform 20 bietet den Vorteil, dass ihre insgesamt neun potentiellen Aufstandsflächen 32 und ihre Öffnungen 29 einem Bediener definierte Wege und Handlungsbereiche innerhalb eines Wartungsraums 21 bereitstellen. Die dreieckige Ausprägung der Plattform 20 bietet an ihrer Außenseite bei einer Rotordrehung um 120° eine horizontal liegende Aufstandsfläche 32, an ihrer zur Rotorachse R gewandten Innenseite sogar bei einer Rotordrehung um 60°. Damit kann sie eine herkömmliche Sicherungsausstattung eines Bedieners, wie z. B. Sicherungsgeschirr und -gurte, unterstützen oder gar ersetzen. Die Plattform 20 verkürzt außerdem Fallwege eines Bedieners erheblich, z. B. von einer Scheitelfläche (nicht dargestellt) der Nabe 3 ausgehend in Richtung eines Anschlussflansches 7 eines Rotorblattes 5, das in diesem Zustand direkt nach unten weist. Die Sicherungsvorrichtung 19 fungiert darüber hinaus als strukturelles Element des Rotors 1 und dient einer Versteifung und damit Stabilisierung des Rotorgehäuses 12 mit der Rotorhaube (nicht dargestellt).

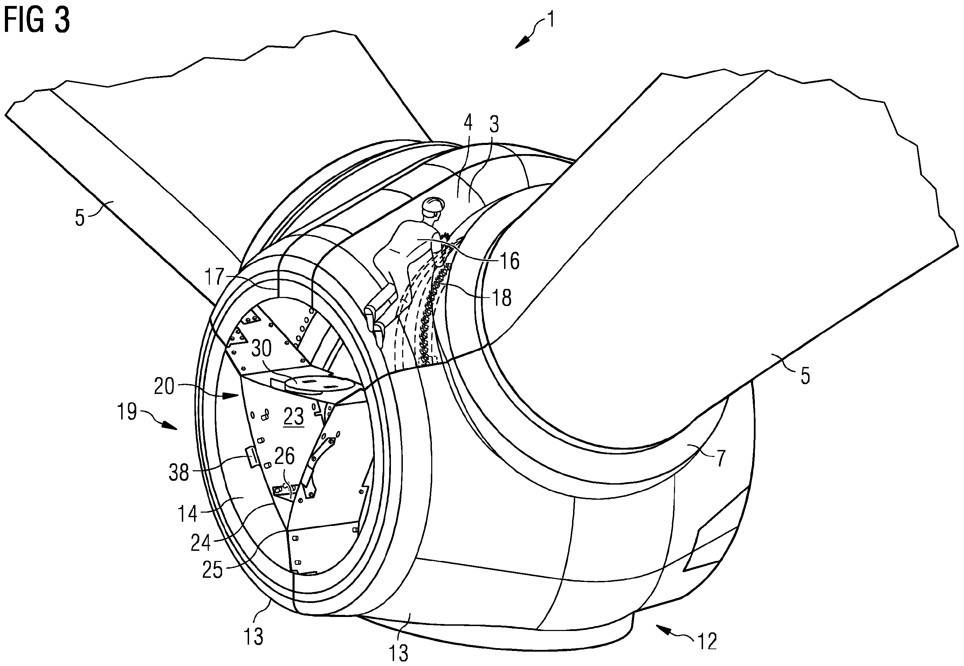

Figur 3 zeigt im Unterschied zu Figur 2 einen Bediener 16, z. B. einen Wartungstechniker, der sich in einem Außenteilraum 22 auf einer gekrümmten Oberfläche der Nabe 3 in Richtung einer Scheitelfläche 4 der Nabe 3 fortbewegt. Ein horizontal liegendes Plattformelement 24 sowie die sich an Enden des Plattformelements 24 anschließenden, geneigt relativ zum Plattformelement 24 verlaufenden Strebeelemente 28 schließen einen oberen Außenteilraum 22 gegenüber weiteren Teilräumen 22, 23 ab. Dadurch wird ein Fallweg des Bedieners und seiner Ausstattung, z. B. lose mitgeführte Ersatzteile und/oder Werkzeug, deutlich verkürzt. Eine durchgehende Erstreckung der Plattformelemente 24 und der Strebeelemente 28 zwischen der Nabe 3 und dem Rotorgehäuse 12 verhindert ein Einklemmen oder Hindurchrutschen des Bedieners und kleinerer Elemente zuverlässig.

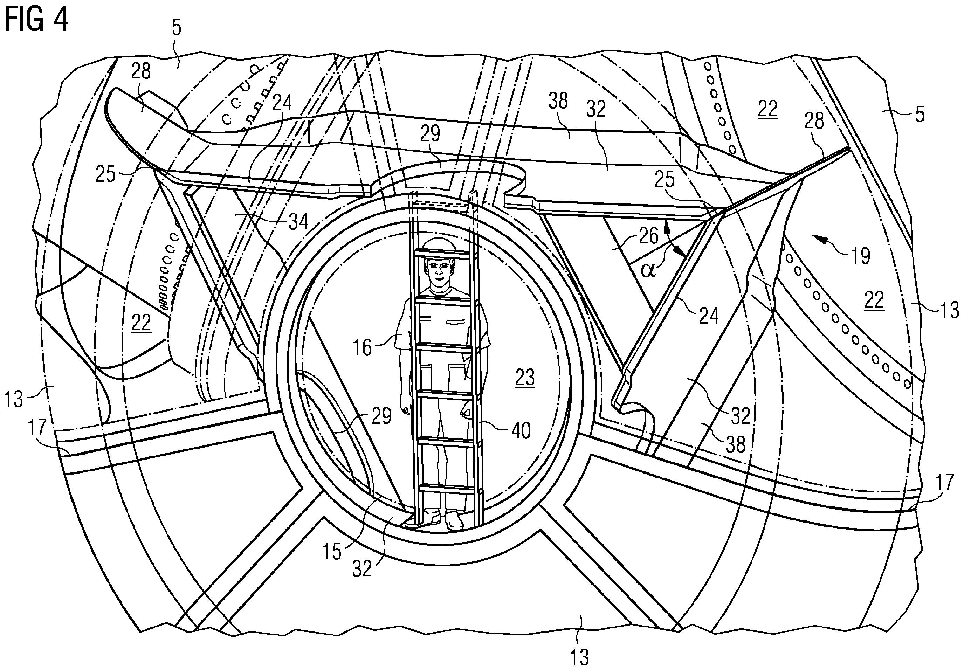

Figur 4 zeigt im Unterschied zu den Figuren 2 und 3 die erfindungsgemäße Sicherungsvorrichtung 19 in frontaler Ansicht. Der Bediener 16 steht zum Betrachter gewandt auf einer horizontalen Aufstandsfläche 32 eines Brückenelements 26 und hat vor sich eine mobile Leiter 40, die ebenfalls auf dem Brückenelement 26 aufsteht. Ein Abstand zwischen dem Brückenelement 26 und dem Plattformelement 24 ist hier größer als eine Körpergröße des Bedieners 16. Die mobile Leiter 40 reicht bis zu einer offen stehenden Öffnung 29. Der Bediener 16 kann beim Hinaufklettern der Leiter 40 durch die Öffnung 29 schlüpfen. Anschließend kann er sich auf einer horizontalen Aufstandsfläche 32 des Plattformelements 24 bewegen. Eine von den Gehäusesegmenten 13 freigegebene Öffnung des Rotorgehäuses 12 wird durch eine scheibenförmige Rotorhaube 15 abgedeckt. Die Plattformelemente 24 weisen Winkelbleche 38 auf, die entlang einer Erstreckung der Plattformelemente 24 zwischen den Strebeelementen 28 verlaufen, und die Plattform 20 zusätzlich an der Nabe 3 befestigen.

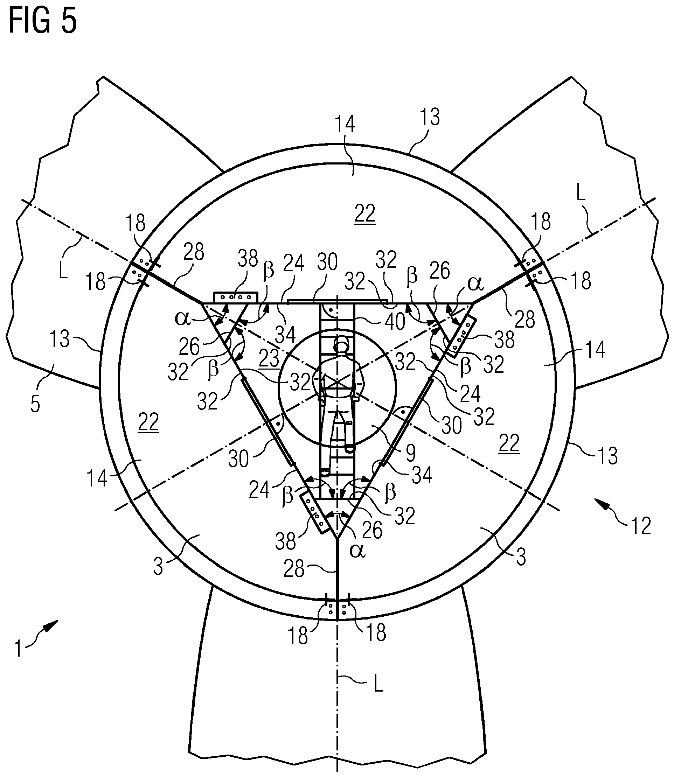

Figur 5 zeigt im Unterschied zu Figur 4 insbesondere den dreizählig radiärsymmetrischen Aufbau der erfindungsgemäßen Sicherungsvorrichtung 19. Jedes der drei Strebeelemente 28 fluchtet mit einer Längsachse L eines der drei Rotorblätter 5 bzw. steht parallel zu ihr. Die Plattform 20 bildet mit ihren Plattformelementen 24 ein gleichseitiges Dreieck aus. Eine Längsachse L eines jeden Rotorblatts 5 steht senkrecht zu einem gegenüberliegenden Plattformelement 24. Die Strebeelemente 28 sind mittels Bolzen 18 als Fixiereinrichtung an Schnittstellen 17 von Segmenten 13 des Rotorgehäuses 12 montiert.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können.

## Patentansprüche

1. Sicherungsvorrichtung (19) zur Sicherung eines Bedieners (16) in einem Rotor (1), insbesondere einer Windturbine, umfassend, in einem Hohlraum (21, 22, 23) zwischen einer Nabe (3) und einem Rotorgehäuse (12) des Rotors (1),
- eine Plattform (20) mit einer Anzahl von Aufstandsflächen (32), von welchen im bestimmungsgemäßen Einsatz der Sicherungsvorrichtung (19) zumindest eine Aufstandsfläche (32) im Wesentlichen horizontal liegt, wobei die Plattform (20) drei Plattformelemente (24) mit jeweils zumindest einer Aufstandsfläche (32) umfasst, die ein Dreieck bilden wobei mindestens eines der Plattformelemente (24) zumindest eine Öffnung (29) als Zugang für einen Bediener (16) sowie ein Schließelement (30) zum Verschließen der Öffnung (29) umfasst;
- Fixiereinrichtung (18, 28) zum Fixieren der Plattform (20) an der Nabe (3) und/oder an einer Innenseite (14) des Rotorgehäuses (12).

2. Sicherungsvorrichtung nach Anspruch 1, wobei die Sicherungsvorrichtung fest an der Nabe (3) des Rotors (1) und/oder an der Innenseite (14) des Rotorgehäuses (12) montiert ist.

3. Sicherungsvorrichtung nach Anspruch 1 oder 2, wobei die Plattform (20) derart relativ zu jeweils zwei Anschlussflanschen (7) von Rotorblättern (5) an der Nabe (3) angeordnet ist, dass eine Aufstandsfläche (32) an einer zum Rotorgehäuse (12) weisenden Seite der Plattform (20) im Wesentlichen parallel zu einer Scheitelfläche (4) der Nabe (3) liegt.

4. Sicherungsvorrichtung nach einem der vorhergehenden Ansprüche, wobei die Plattform (20) zwischen einer Oberfläche an der Außenseite der Nabe (3) und einer Oberfläche an der Innenseite (14) des Rotorgehäuses (12) erstreckt und somit den Hohlraum (21, 22, 23) zwischen der Nabe (3) und der Innenseite (14) des Rotorgehäuses (12) in im Wesentlichen mindestens zwei voneinander separierte Hohlraumbereiche (22, 23) teilt.

5. Sicherungsvorrichtung nach einem der vorhergehenden Ansprüche, wobei ein durch die Plattformelemente (24) begrenzter Raum (23) hinreichend groß dimensioniert ist, dass der Raum (23) einen Bediener (16) beherbergen kann.

6. Sicherungsvorrichtung nach einem der vorhergehenden Ansprüche, wobei ein Schließelement (30) derart ausgebildet ist, dass es mit dem Gewicht eines Bedieners (16) belastet werden kann, ohne sich selbständig zu öffnen.

7. Sicherungsvorrichtung nach einem der Ansprüche 5 oder 6, wobei die Plattform (20) Brückenelemente (26) umfasst, die Berührungsstellen (25) der Plattformelemente (24) an jeweils zu einer Rotorachse (R) weisenden Innenseiten (34) der Plattformelemente (24) überspannen.

8. Sicherungsvorrichtung nach Anspruch 7, wobei die Plattformelemente (24) an ihren zur Rotorachse (R) weisenden Innenseiten (34) in einem Winkel (β) von 120° zu ebenfalls zur Rotorachse (R) gerichteten Innenseiten (27) jeweils benachbarter Brückenelemente (26) stehen.

9. Sicherungsvorrichtung nach einem der Ansprüche 5 bis 8, wobei die Fixiereinrichtung (18, 28) Strebeelemente (28) umfasst, welche die Plattform (20) an Berührungsstellen (25) der Plattformelemente (24) mit der Innenseite (14) des Rotorgehäuses (12) verbinden.

10. Sicherungsvorrichtung nach Anspruch 9, wobei die Strebeelemente (28) im Bereich von Schnittstellen (17) von Segmenten (13) des Rotorgehäuses (12) befestigt sind.

11. Sicherungsvorrichtung nach einem der Ansprüche 9 oder 10, mit flächigen Platten (24) als Plattformelemente und/oder Brückenelemente und/oder Strebeelemente.

12. Sicherungsvorrichtung nach einem der Ansprüche 5 bis 11, wobei eine Erstreckung (a) der Plattformelemente (24) quer zur Rotorachse (R) mindestens 1m, vorzugsweise mindestens 1,3m und besonders bevorzugt mindestens 1,5m sowie höchstens 5m, vorzugsweise höchstens 4m und besonders bevorzugt höchstens 3m umfasst.

13. Rotor (1) mit einer Sicherungsvorrichtung (19) nach einem der Ansprüche 1 bis 12.

14. Windturbine mit einer Sicherungsvorrichtung nach einem der Ansprüche 1 bis 12.

15. Verfahren zur Sicherung eines Bedieners (16) mit einer Sicherungsvorrichtung (19) nach einem der Ansprüche 1 bis 12 in einem Hohlraum zwischen Nabe (3) und Rotorgehäuse (12) eines Rotors (1), insbesondere einer Windturbine, wobei zumindest eine Aufstandsfläche (32) einer Plattform (20) der Sicherungsvorrichtung (19) im bestimmungsgemäßen Einsatz der Sicherungsvorrichtung (19) im Wesentlichen horizontal positioniert wird, wobei die Plattform (20) an der Nabe (3) und/oder an einer Innenseite (14) des Rotorgehäuses (12) fixiert ist.

## Claims

1. Safety device (19) for the safety of an operator (16) in a rotor (1), more particularly a wind turbine, comprising, in a hollow chamber (21, 22, 23) between a hub (3) and a rotor housing (12) of the rotor (1),
- a platform (20) having a number of standing surfaces (32) of which when the safety device (19) is used as intended at least one standing surface (32) lies substantially horizontal, wherein the platform (20) comprises three platform elements (24) each with at least one standing surface (32) which form a triangle wherein at least one of the platform elements (24) comprises at least one opening (29) as access for an operator (16) as well as one closing element (30) for closing the opening (29);
- fixing device (18, 28) for fixing the platform (20) on the hub (3) and/or on an inner side (14) of the rotor housing (12) .

2. Safety device according to Claim 1 wherein the safety device is mounted fixed on the hub (3) of the rotor (1) and/or on the inner side (14) of the rotor housing (12).

3. Safety device according to Claim 1 or 2 wherein the platform (20) is arranged relative to each two connecting flanges (7) of the rotor blades (5) on the hub (3) so that a standing surface (32) on a side of the platform (20) facing the rotor housing (12) lies substantially parallel to an vertex face (4) of the hub (3).

4. Safety device according to one of the preceding claims wherein the platform (20) extends between a surface on the outer side of the hub (3) and a surface on the inner side (14) of the rotor housing (12) and thus divides the hollow chamber (21, 22, 23) between the hub (3) and the inner side (14) of the rotor housing (12) into substantially at least two hollow chamber regions (22, 23) separated from one another.

5. Safety device according to one of the preceding claims wherein a chamber (23) delimited by the platform elements (24) is dimensioned sufficiently large so that the chamber (23) can shelter an operator (16).

6. Safety device according to one of the preceding claims, wherein a closing element (30) is designed so that it can be loaded with the weight of an operator (16) without opening automatically.

7. Safety device according to one of Claims 5 or 6 wherein the platform (20) comprises bridging elements (26) which span the contact points (25) of the platform elements (24) at the respective inner sides (34) of the platform elements (24) facing a rotor axis (R).

8. Safety device according to Claim 7 wherein the platform elements (24) stand at their inner sides (34) facing the rotor axis (R) at an angle (β) of 120° to the inner sides (27) of the respective adjoining bridging elements (26) which are likewise directed towards the rotor axis (R).

9. Safety device according to one of Claims 5 to 8 wherein the fixing device (18, 28) comprises strut elements (28) which connect the platform (20) at the contact points (25) of the platform elements (24) to the inner side (14) of the rotor housing (12).

10. Safety device according to Claim 9 wherein the strut elements (28) are fastened in the region of interfaces (17) of segments (13) of the rotor housing (12).

11. Safety device according to one of Claims 9 or 10 with flat plates (24) as platform elements and/or bridging elements and/or strut elements.

12. Safety device according to one of Claims 5 to 11 wherein an extension (a) of the platform elements (24) transversely to the rotor axis (R) comprises at least 1m, preferably at least 1.3m and more particularly preferred at least 1.5m as well as at most 5m, preferably at most 4m and particularly preferred at most 3m.

13. Rotor (1) with a safety device (19) according to one of Claims 1 to 12.

14. Wind turbine with a safety device according to one of Claims 1 to 12.

15. Method for securing an operator (16) with a safety device (19) according to one of Claims 1 to 12 in a hollow chamber between hub (3) and rotor housing (12) of a rotor (1), more particularly a wind turbine, wherein at least one standing surface (32) of a platform (20) of the safety device (19) when the safety device (19) is used as intended is positioned substantially horizontally wherein the platform (20) is fixed on the hub (3) and/or on an inner side (14) of the rotor housing (12).

## Revendications

1. Dispositif de protection (19) destiné à la protection d'un technicien (16) dans un rotor (1), en particulier d'une éolienne, comprenant, dans une cavité (21, 22, 23) entre un moyeu (3) et un carter de rotor (12) du rotor (1),
- une plateforme (20) avec une pluralité de surfaces de station debout (32), desquelles, dans l'usage prévu du dispositif de protection (19), au moins une surface de station debout (32) repose essentiellement horizontalement, dans lequel la plateforme (20) comprend trois éléments de plateforme (24) avec respectivement au moins une surface de station debout (32) qui forment un triangle, dans lequel au moins un des éléments de plateforme (24) comprend au moins une ouverture (29) en tant qu'accès pour un technicien (16) ainsi qu'un élément de fermeture (30) pour fermer l'ouverture (29) ;
- un dispositif de fixation (18, 28) pour fixer la plateforme (20) sur le moyeu (3) et/ou sur une face intérieure (14) du carter de rotor (12).

2. Dispositif de protection selon la revendication 1, dans lequel le dispositif de protection est monté fixement sur le moyeu (3) du rotor (1) et/ou sur la face intérieure (14) du carter de rotor (12).

3. Dispositif de protection selon la revendication 1 ou 2, dans lequel la plateforme (20) est ainsi disposée par rapport à respectivement deux brides de raccordement (7) de pales (5) de rotor sur le moyeu (3) qu'une surface de station debout (32) repose sur un côté de la plateforme (20) orienté vers le carter de rotor (12), essentiellement parallèlement à une surface au sommet (4) du moyeu (3).

4. Dispositif de protection selon l'une des revendications précédentes, dans lequel la plateforme (20) s'étend entre une surface sur la face extérieure du moyeu (3) et une surface sur la face intérieure (14) du carter de rotor (12) et partage ainsi la cavité (21, 22, 23) entre le moyeu (3) et la face intérieure (14) du carter de rotor (12) en essentiellement au moins deux zones de cavité (22, 23) séparés l'un de l'autre.

5. Dispositif de protection selon l'une des revendications précédentes, dans lequel un espace (23) délimité par les éléments de plateforme (24) est dimensionné suffisamment afin que l'espace (23) puisse héberger un technicien (16).

6. Dispositif de protection selon l'une des revendications précédentes, dans lequel un élément de fermeture (30) est ainsi formé qu'il peut être chargé du poids d'un utilisateur (16) sans s'ouvrir indépendamment.

7. Dispositif de protection selon l'une des revendications 5 ou 6, dans lequel la plateforme (20) comprend des éléments de passerelle (26) qui enjambent des points de contact (25) des éléments de plateforme (24) sur des faces intérieures (34) des éléments de plateforme (24) orientées respectivement vers un axe de rotor (R) .

8. Dispositif de protection selon la revendication 7, dans lequel les éléments de plateforme (24), sur leurs faces intérieures (34) orientées vers l'axe de rotor (R), sont dans un angle (β) de 120° par rapport à des faces intérieures (27) d'éléments de passerelle (26) voisins respectifs dirigées également vers l'axe de rotor (R).

9. Dispositif de protection selon l'une des revendications 5 à 8, dans lequel le dispositif de fixation (18, 28) comprend des éléments de soutien (28) qui relient la plateforme (20) avec la face intérieure (14) du carter de rotor (12) sur des points de contact (25) des éléments de plateforme (24).

10. Dispositif de protection selon la revendication 9, dans lequel les éléments de soutien (28) sont fixés au niveau de points d'intersection (17) de segments (13) du carter de rotor (12) .

11. Dispositif de protection selon l'une des revendications 9 ou 10, comprenant des plateaux plans (24) en tant qu'éléments de plateforme et/ou éléments de passerelle et/ou éléments de soutien.

12. Dispositif de protection selon l'une des revendications 5 à 11, dans lequel une extension (a) des éléments de plateforme (24) transversalement à l'axe de rotor (R), fait au moins 1m, de préférence au moins 1,3m et de manière particulièrement préférée au moins 1,5m ainsi qu'au plus 5m, de préférence au plus 4 m et de manière particulièrement préférée au plus 3m.

13. Rotor (1) comprenant un dispositif de protection (19) selon l'une des revendications 1 à 12.

14. Éolienne comprenant un dispositif de protection selon l'une des revendications 1 à 12.

15. Procédé destiné à la protection d'un technicien (16) comprenant un dispositif de protection (19) selon l'une des revendications 1 à 12 dans une cavité entre moyeu (3) et carter de rotor (12) d'un rotor (1), en particulier d'une éolienne, dans lequel au moins une surface de station debout (32) d'une plateforme (20) du dispositif de protection (19), dans l'usage prévu du dispositif de protection (19), est positionnée essentiellement horizontalement, dans lequel la plateforme (20) est fixée sur le moyeu (3) et/ou sur une face intérieure (14) du carter de rotor (12).
